# DEMANDE DE BREVET EUROPEEN

(11) **EP 1 085 475 A1**
(43) Date de publication de la demande: **21.03.2001**
(21) Numéro de dépôt: 00402517.7
(22) Date de dépôt: 13.09.2000
(51) Int. Cl.: G07F 7/00, G07F 7/10, G07F 7/08, G07F 7/02, G07F 5/00, G07B 1/00, G07F 17/40, G07F 5/22, G07F 17/42

(54) **Procédé de transfert monétaire, notamment de collecte électronique de fonds**

(30) Priorité: 13.09.1999 FR 9911407
(71) Demandeur: Innovatron, 75006 Paris (FR)
(72) Inventeur: Ilie, François, 91120 Palaiseau (FR)
(74) Mandataire: Dupuis-Latour, Dominique

(57) **Abrégé**

On exécute avec un objet portatif telle qu'une carte à microcircuit (10) une transaction récapitulative fonction de l'historique de transactions financières antérieures. Une transaction récapitulative comprend les étapes suivantes : a) recherche, à partir d'une information mémorisée, de la limite à partir de laquelle les transactions effectuées sont postérieures à la dernière transaction récapitulative ; b) recherche, dans un historique, des différentes transactions opérées depuis la dernière transaction récapitulative trouvée à l'étape a ; c) par des moyens incluant un serveur (TEPT, CAR) relié au terminal (12, 14 ; 16), calcul du montant d'une nouvelle transaction récapitulative ; d) émission d'un ordre de transfert monétaire au profit d'un tiers destinataire ; et e) mise à jour de ladite information mémorisée. Très avantageusement, l'identification de la nouvelle transaction récapitulative est de forme marqueur, inscrit dans une zone dont le format est celui d'une zone de mémoire financière, avec un champ date contenant la date de la transaction récapitulative courante et un champ de valeur financière, le champ de valeur financière contenant une valeur non financièrement significative, notamment une valeur nulle.

## Description

L'invention concerne les transferts monétaires, notamment la collecte électronique de fonds.

Il s'agit d'exécuter avec un objet portatif telle qu'une carte à microcircuit ou "carte à puce" une transaction (que l'on appellera "transaction récapitulative") opérant cette collecte de fonds à partir de paramètres fonction de l'historique de transactions financières antérieures opérées avec cette même carte à puce.

Une application possible que l'on exposera en détail, mais qui n'a cependant pas de caractère limitatif, est la collecte de fonds au profit d'organismes caritatifs ou humanitaires.

Une automatisation du processus de collecte de fonds peut constituer un progrès significatif pour motiver les donateurs actifs ou potentiels, et également pour une plus grande efficacité de la collecte par les organismes caritatifs.

Un tel procédé a notamment été proposé dans la demande française 98 03424 du 20 mars 1998 au nom de Roland Moreno, pour "procédé et système de collecte électronique de fonds".

La présente invention a pour objet de proposer des mises en oeuvre particulières d'un tel procédé, permettant notamment son utilisation avec des cartes à puce préexistantes déjà en circulation, autorisant ainsi une généralisation rapide du procédé.

À cet effet, le procédé de l'invention est caractérisé par les étapes suivantes :
a) recherche, à partir d'une information mémorisée, de la limite à partir de laquelle les transactions effectuées avec la carte sont postérieures à la date de la dernière transaction récapitulative précédemment opérée avec la carte,
b) recherche, dans une mémoire historique, des différentes transactions financières opérées avec la carte depuis la date de la dernière transaction récapitulative trouvée à l'étape a),
c) par des moyens incluant un serveur relié au terminal calcul, à partir des données trouvées à l'étape b), du montant correspondant d'une nouvelle transaction récapitulative,
d) émission d'un ordre de transfert monétaire, fonction du montant calculé à l'étape c), au profit d'un tiers destinataire, et
e) mise à jour de l'information permettant de déterminer la limite à partir de laquelle les transactions effectuées avec la carte sont postérieures à la dernière transaction récapitulative.

Ladite information mémorisée peut être en particulier de type pointeur sur une adresse de l'historique, de type marqueur inséré dans l'historique, ou contenir la date de la dernière transaction récapitulative.

Très avantageusement, ladite information mémorisée est de type marqueur inscrit dans une zone mémoire dont le format est celui d'une zone de mémoire financière, avec un champ date contenant la date de la transaction récapitulative courante et un champ de valeur financière, le champ de valeur financière contenant une valeur non financièrement significative, notamment une valeur nulle.

En variante ou en complément. cette identification de la nouvelle transaction récapitulative peut être mémorisée dans une mémoire de la carte ou d'un site télématique distant.

La mémoire historique explorée à l'étape b) peut être une mémoire de la carte, ou bien une mémoire d'un site télématique distant.

Le procédé peut en outre comporter une étape préalable d'initialisation comprenant l'enregistrement de règles de calcul du montant de la transaction récapitulative, dans une mémoire de la carte ou bien dans une mémoire d'un site télématique distant en même temps qu'un identifiant du porteur de la carte, qui peut être en particulier constitué de son nom, de son adresse postale et de ses références de carte bancaire.

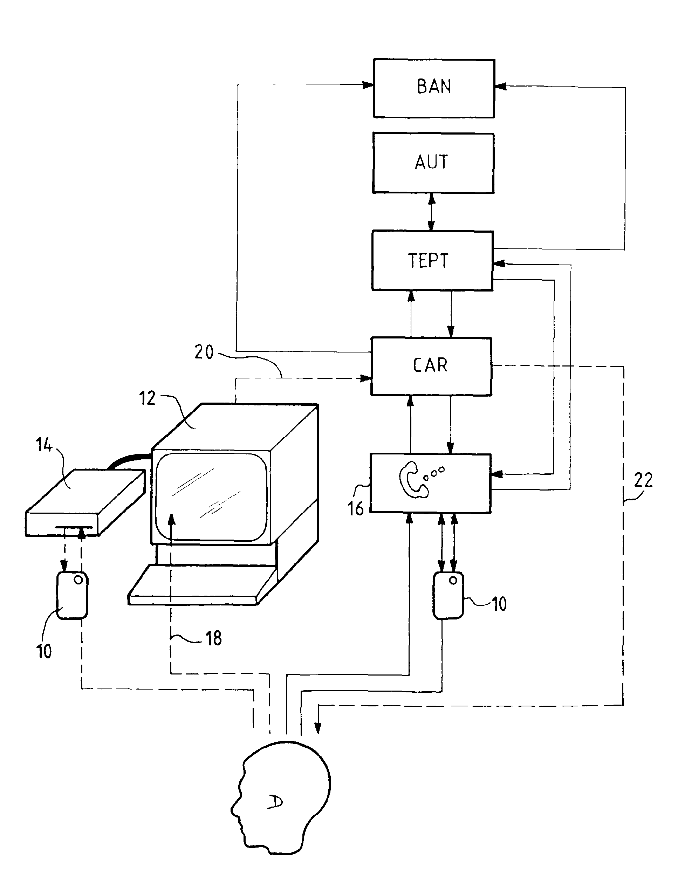

D'autres caractéristiques et avantages de l'invention apparaîtront à la lecture de la description détaillée ci-dessous d'exemples de mise en oeuvre, en référence à la figure unique annexée qui est une représentation synoptique des divers éléments du système impliqués dans la mise en oeuvre du procédé de l'invention.

L'invention est basée sur l'utilisation de cartes à puce de type carte bancaire. Comme on le comprendra à la lecture de la description, ces cartes peuvent être avantageusement des cartes bancaires préexistantes, sans qu'il soit nécessaire de prendre en compte l'application de l'invention ni lors de la conception du logiciel d'exploitation des cartes, ni lors de la personnalisation initiale (celle faite par les banques) de ces mêmes cartes. Une telle carte est utilisée de façon conventionnelle avec des TPE (Terminaux de Paiement Électronique) ou avec des TAD (Terminaux de paiement À Distance) pour opérer des transactions financières correspondant au règlement d'un achat ou d'une prestation de services.

L'historique des transactions financières successives est, de manière classique, mémorisé dans la carte (mémoire interne) et/ou par un site distant, par exemple la banque ayant délivré la carte (mémoire externe).

L'objet de la présente invention est de proposer un procédé permettant au titulaire de la carte d'effectuer un don à un organisme caritatif, ce don étant fonction de l'historique des diverses transactions financières exécutées avec la carte, sur la base de règles choisies et acceptées par le donateur, à son initiative et au moment où il l'aura décidé - matérialisant ainsi le caractère volontaire et motivé du don.

Ce don peut être par exemple un pourcentage du montant de chaque transaction financière opéré avec la carte (par exemple 1 % du montant de chaque transaction), ou un montant fixe (par exemple 1 franc à chaque transaction), ou toute autre règle de calcul.

Dès lors, il est essentiel de récapituler les transactions financières successives opérées avec la carte, notamment celles qui ont été effectuées depuis le dernier don.

Il est nécessaire pour ce faire de mémoriser dans un emplacement approprié (dans la carte et/ou dans un serveur distant) une information permettant de déterminer les transactions postérieures à la date du dernier don effectué, de prendre en compte cette donnée à chaque transaction de don, puis de remettre à jour cette information une fois la transaction de don achevée.

Lorsque l'information est inscrite dans la carte, et que celle-ci mémorise en interne un historique des transactions, l'information permettant d'identifier la transaction relative au dernier don peut être très avantageusement se présenter sous la forme, que l'on appellera "marqueur", d'une simple rubrique de l'historique des transactions financières. En effet, chacune de ces rubriques comporte un champ de date et un champ de montant ; pour la mémorisation du marqueur, il suffit d'inscrire dans le champ de date la date à laquelle a été effectué le don (c'est-à-dire la date courante lors de l'inscription de cette donnée) et dans le champ de montant, une valeur non significative du point de vue financier.

Par "valeur non significative du point de vue financier". on entendra une valeur qui ne peut être reconnue par les moyens de lecture de l'historique (tels que ceux que l'on trouve dans tous les TPE) comme représentative d'une transaction réelle. Un tel montant non financièrement significatif est typiquement un montant "zéro", car pour un montant nul il ne peut pas y avoir eu de transaction ; d'autre part cette valeur "zéro" a l'avantage, lors notamment des cumuls des montants de transaction pour voir si un plafond de dépenses n'est pas dépassé, de ne pas interférer avec ce cumul puisque la somme des montants ne sera pas modifiée par le montant nul de la rubrique ajoutée.

Le montant "zéro" n'interférera donc pas avec le fonctionnement d'un TPE classique lors de l'exécution d'une transaction financière ; en revanche, il pourra être reconnu par un terminal spécifique ou spécifiquement adapté (voir ci-dessous), la zone d'historique des cartes bancaires actuelle étant librement accessible en lecture une fois le code confidentiel ("PIN") du porteur de la carte présenté à celle-ci. Cette rubrique sera alors reconnue comme constituant le marqueur recherché, et interprétée et traitée comme telle.

On va maintenant décrire des mises en oeuvre de l'invention, en référence à la figure unique annexée. Sur cette figure, les échanges d'informations entres les différents blocs qui sont déjà mis en oeuvre dans les transactions classiques de télépaiement ont été représentés par les liaisons en traits pleins, tandis que les échanges spécifiques à la mise en oeuvre de l'invention l'ont été par les liaisons en tiretés.

Sur cette figure, le donateur D, qui dispose d'une carte bancaire 10 pour l'exécution, en elle-même classique, de transactions financières avec des TPE (non représentés), peut également utiliser celle-ci en liaison avec un machine de personnalisation 12 (par exemple un micro-ordinateur ou un terminal vidéotex coopérant avec un lecteur de carte à puce 14) et/ou avec un "terminal de don" 16, qui peut être un terminal spécifique ou bien un terminal réalisé à partir d'un TAD ou TPE standard éventuellement adapté pour la mise en oeuvre de l'invention, ou encore intégré à un terminal standard tel qu'un publiphone (ou horodateur, terminal bancaire, etc.) également adapté pour la mise en oeuvre de l'invention.

Les terminaux 12 et 16 coopèrent avec le serveur CAR d'un organisme caritatif ou d'un groupement d'organismes caritatifs, avec le serveur TEPT d'un organisme gestionnaire de télépaiement relié lui-même à un serveur d'autorisation AUT et à un serveur bancaire BAN.

On va maintenant décrire deux mises en oeuvre possibles, avec et sans écriture dans la carte lors de l'exécution de la transaction récapitulative (transaction de don).

### Mise en oeuvre avec écriture dans la carte

Dans cette mise en oeuvre, la carte nécessite une initialisation, réalisée par exemple par la machine de personnalisation 12, 14.

La machine demande tout d'abord au donateur D de fournir son code confidentiel afin que l'opération puisse être réalisée avec la sécurité et la confidentialité souhaitées.

La machine de personnalisation acquiert, par saisie (liaison 18) et par lecture de la carte 10, les informations relatives au porteur, à ses références bancaires et à ses volontés de don, telles que le pourcentage ou le quantum du don (par exemple "1 % de chaque dépense" ou " 1 franc à chaque dépense"). Le choix d'un ou plusieurs organismes récipiendaires peut également être proposé. Ces données sont inscrites dans la carte via le lecteur 14.

Si le donateur désire qu'un reçu lui soit envoyé à chaque don, il introduit (liaison 18) ses nom et adresse pour transmission au serveur CAR de l'organisme caritatif (liaison 20).

Si l'utilisateur ne désire pas que les transactions bancaires précédentes soient prises en compte lors du prochain don, l'information permettant de déterminer les transactions postérieures à la date du dernier don est mise à jour comme si l'utilisateur venait de faire un don. Cette mise à jour consiste à écrire un marqueur comprenant la date courante et un montant nul dans l'historique des transactions.

Lorsque le porteur de la carte, ayant effectué un certain nombre d'achats, veut concrétiser le don à l'organisme caritatif, il introduit sa carte 10 dans un terminal prévu à cet effet, par exemple un publiphone 16 configuré de manière appropriée.

Le publiphone demande alors au porteur (donateur) de taper son code confidentiel et le fait vérifier par la carte.

Si le porteur manifeste sa volonté de faire un don, par exemple en tapant un numéro de téléphone particulier, le serveur CAR est appelé et examine si la carte a été antérieurement initialisée comme indiqué plus haut. Si tel est le cas, le système examine l'historique des transactions effectuées, notamment depuis le dernier don, calcule le montant du don sur la base des règles fixées par le donateur et propose à ce dernier le montant trouvé, par exemple sur un afficheur.

Si le donateur est d'accord pour effectuer le don sur la base de ce montant, le publiphone 16 se connecte alors au serveur TEPT à créditer et opère une transaction bancaire du montant du don, le serveur de l'association fonctionnant de la même manière qu'un "serveur commerçant" d'un système de télépaiement électronique, en association avec un gestionnaire de télépaiement TEPT, lui-même sous la responsabilité de la banque BAN.

Le don ayant été ainsi concrétisé, pour laisser dans la carte une identification de celui-ci, le système inscrit alors dans l'historique des transactions de la mémoire de la carte une transaction "marqueur", voisine de la transaction de don (juste avant ou juste après) comprenant un montant nul et éventuellement la date courante.

Si la transaction a été couronnée de succès et que l'adresse du donateur est connue, le serveur CAR de l'association caritative édite un reçu du don et adresse ce reçu (liaison 22) au donateur D.

### Mise en oeuvre sans écriture dans la carte

La machine de personnalisation, réduite ici au simple terminal 12 (le lecteur de carte 14 n'est plus nécessaire) réalisé la saisie initiale du nom, de l'adresse, des références bancaires et des règles de calcul des dons du porteur de la carte (qui n'a pas besoin de présenter celle-ci), ces informations étant transmises (liaison 20) au serveur CAR de l'association pour y être conservées.

Au moment de la concrétisation du don, le porteur de la carte introduit celle-ci dans le publiphone 16, qui lui demande de taper son code confidentiel et fait vérifier celui-ci par la carte.

Si le porteur manifeste sa volonté de réaliser un don. par exemple en tapant un numéro de téléphone spécial, le publiphone lit alors l'historique des transactions dans la carte et se connecte au serveur CAR de l'association à créditer pour que cette dernière réalise une transaction dont le montant sera déterminé en fonction de l'historique lu dans la carte.

Du côté du serveur CAR, si celui-ci a été personnalisé pour le donateur qui s'y connecte, le montant du don est calculé en fonction de l'historique des transactions reçues depuis le publiphone, de la date du dernier don (mémorisée par le serveur CAR) et des règles de calcul du don exprimées au moment de l'initialisation et également mémorisées par le serveur CAR ; si ces informations ne sont pas complètes, le serveur invitera le porteur de la carte à saisir la valeur du don.

La transaction est ensuite réalisée classiquement, comme indiqué plus haut, et si la transaction est couronnée de succès et que l'adresse du donateur est disponible, un reçu lui sera adressé comme précédemment.

Dans une variante, le porteur peut décider une première fois de créditer un organisme caritatif d'une partie seulement du montant calculé depuis l'initialisation de la carte. Lors du prochain don, le système peut ensuite tenir compte du montant cumulé des transactions depuis l'initialisation pour proposer un nouveau montant de don selon les règles établies, minoré du montant du don déjà effectué. Pour faire ce calcul, il peut être avantageux de distinguer entre les dons d'une part, identifiés par un marqueur en forme d'une transaction voisine de montant zéro, et l'initialisation d'autre part, identifiée par un autre marqueur, par exemple sous forme de deux transactions voisines de montants zéro.

Une telle identification spécifique de l'initialisation présente un autre avantage. La capacité de la mémoire de la carte réservée à l'historique étant limitée, celui-ci peut être effacé après un nombre (relativement important) de transactions, créant une anomalie dans le calcul du montant de don proposé. L'effacement de l'historique entraîne l'effacement de l'initialisation, ce qui peut être exploité pour prévenir le porteur de la situation d'anomalie.

## Revendications

1. Un procédé de transfert monétaire, notamment de collecte électronique de fonds, dans lequel on exécute avec un objet portatif telle qu'une carte à microcircuit (10) coopérant avec un terminal (12, 14 ; 16) une transaction récapitulative dont les paramètres sont fonction de l'historique de transactions financières antérieures exécutées avec cette même carte,
procédé caractérisé en ce que l'exécution d'une nouvelle transaction récapitulative comprend les étapes suivantes :
a) recherche, à partir d'une information mémorisée, de la limite à partir de laquelle les transactions effectuées avec la carte sont postérieures à la date de la dernière transaction récapitulative précédemment opérée avec la carte,
b) recherche, dans une mémoire historique, des différentes transactions financières opérées avec la carte depuis la date de la dernière transaction récapitulative trouvée à l'étape a),
c) par des moyens incluant un serveur (TEPT, CAR) relié au terminal (12, 14 ; 16) calcul, à partir des données trouvées à l'étape b), du montant correspondant d'une nouvelle transaction récapitulative.
d) émission d'un ordre de transfert monétaire, fonction du montant calculé à l'étape c), au profit d'un tiers destinataire, et
e) mise à jour de l'information permettant de déterminer la limite à partir de laquelle les transactions effectuées avec la carte sont postérieures à la dernière transaction récapitulative.

2. Le procédé de la revendication 1, dans lequel ladite information mémorisée est de forme marqueur, inscrit dans une zone mémoire dont le format est celui d'une zone de mémoire financière, avec un champ date contenant la date de la transaction récapitulative courante et un champ de valeur financière, le champ de valeur financière contenant une valeur non financièrement significative.

3. Le procédé de la revendication 2, dans lequel la valeur non financièrement significative est une valeur nulle.

4. Le procédé de l'une des revendications 1 à 3, dans lequel ladite information mémorisée est mémorisée dans une mémoire de la carte.

5. Le procédé de l'une des revendications 1 à 3, dans lequel ladite information mémorisée est mémorisée dans une mémoire d'un site télématique distant.

6. Le procédé de l'une des revendications 1 à 4, dans lequel la mémoire historique explorée à l'étape b) est une mémoire de la carte.

7. Le procédé de l'une des revendications 1, 2, 3 ou 5, dans lequel la mémoire historique explorée à l'étape b) est une mémoire d'un site télématique distant (CAR).

8. Le procédé de l'une des revendications 1 à 7, comportant en outre une étape préalable d'initialisation comprenant l'enregistrement de règles de calcul du montant de la transaction récapitulative.

9. Le procédé de la revendication 8, dans lequel les règles de calcul sont enregistrées dans une mémoire de la carte.

10. Le procédé de la revendication 8, dans lequel les règles de calcul sont enregistrées dans une mémoire d'un site télématique distant (CAR), en même temps qu'un identifiant du porteur de la carte.
